Europäisches Patentamt

European Patent Office

Office européen des brevets

(11) Veröffentlichungsnummer: **0 475 309 A1**

# (12) EUROPÄISCHE PATENTANMELDUNG

(21) Anmeldenummer: **91115152.0**

(22) Anmeldetag: **07.09.91**

(51) Int. Cl.⁵: **F16L 55/165**, F16L 55/162, E03F 3/04

---

(30) Priorität: **14.09.90 CH 2975/90**

(43) Veröffentlichungstag der Anmeldung:
**18.03.92 Patentblatt 92/12**

(84) Benannte Vertragsstaaten:
**AT BE DE DK ES FR GB IT NL SE**

(71) Anmelder: **Corazza, Leo**
**Sonnenbergstrasse 52**
**CH-9030 Abtwil(CH)**

(72) Erfinder: **Corazza, Leo**
**Sonnenbergstrasse 52**
**CH-9030 Abtwil(CH)**

(74) Vertreter: **Petschner, Goetz**
**Patentanwaltsbüro G. Petschner**
**Seidengasse 18**
**CH-8001 Zürich(CH)**

---

(54) **Verfahren und Sanierungseinrichtung zum Sanieren von Kanalisationsrohren.**

(57) Zur Sanierung eines im Erdreich (1) verlegten Kanalisationsrohres (2) wird von der Innenwand (2') dieses Rohres distanziert ein Korrosionsschutzrohr (3) angeordnet. Hierfür erfolgt dessen Abstützung temporär über eine Schalungsvorrichtung (4) einer Sanierungseinrichtung. Im Ringspalt (6) zwischen den beiden Rohren (2 und 3) ist ein aushärtbares Material (7) injiziert, nach dessen Bindung die Schalungsvorrichtung (4) wieder entfernt wird.

Dies ergibt ein saniertes Kanalisationsrohr von höchster Güte bei geringsten Sanierungskosten.

FIG. 1

Rank Xerox (UK) Business Services

EP 0 475 309 A1

Die vorliegende Erfindung betrifft ein Verfahren zum Sanieren von Kanalisationsrohren.

Es ist bekannt, dass Abwasseranlagen, insbesondere Kanalisationsrohre aus zementgebundenen Baustoffen, infolge stark zunehmender Aggressivität des Abwassers einer erhöhten Korrosion unterliegen und so rasch saniert werden müssen, um das Grundwasser von den lebensgefährdenden Einflüssen der Kanalisationsabwässer freizuhalten.

Sanierung bedeutet in diesem Zusammenhang aber bis heute ein Auswechseln der Rohre, was allerdings sehr hohe Instandsetzungskosten verursacht.

Es ist nun Aufgabe der vorliegenden Erfindung, ein Verfahren zum Sanieren solcher Kanalisationsrohre zu schaffen, das gestattet, bei vergleichsweise sehr geringen Kosten das betreffende Kanalisationsnetz für eine nun praktisch unbegrenzte Benutzbarkeit wieder herzurichten.

Dies wird erfindungsgemäss zunächst dadurch erreicht, dass von der Innenwand des betreffenden Kanalisationsrohrabschnittes distanziert ein, dem Kanalisationsrohrprofil entsprechender Korrosionsschutzrohrabschnitt temporär durch eine Schalungsvorrichtung abgestützt, dann im Ringspalt zwischen Kanalisationsrohr und Korrosionsschutzrohr ein aushärtbares Material injiziert und dann die Schalungsvorrichtung wieder entfernt wird.

Bei geeigneter Materialwahl für das aus Abschnitten schrittweise zusammengefügte und durch das Injektionsmaterial fest mit dem zu sanierenden Kanalisationsrohr verbundene Korrosionsschutzrohr lässt sich nun auf ausserordentlich kostengünstige Weise eine Sanierung mit absolutem Korrosionsschutz von innen nach aussen und umgekehrt erreichen, wobei auch bei entstandenen Scheitelrissen am zu sanierenden Kanalisationsrohr den ursprünglich gestellten Anforderungen an die Festigkeit solcher Systeme durch die Einbringung des Injektionsmaterials Genüge geleistet wird.

Eine weitere Ausgestaltung der vorliegenden Erfindung besteht deshalb in der Verwendung von vorgefertigten Rohrabschnitten aus einem Hart-Kunststoff, wie PVC oder PE-HD, für das Korrosionsschutzrohr.

Solche, als BKU-System bekannte Korrosionsschutzrohre eignen sich für alle Kanalisationsrohrquerschnitte und werden aus Profilen zusammengesetzt, die im erforderlichen Radius extrudiert und dann durch Klemmleisten aus PVC hart, die mit einem eingelegten elastomeren Dichtprofil versehen sind, längsverbunden werden. In der Regel ragen umfänglich verteilt vom Korrosionsschutzrohr T-förmige Verankerungs- und Armierungs-Rippen ab, um eine innige Verbindung mit dem Injektionsmaterial zu gewährleisten. Ferner gestatten solche Korrosionsrohrabschnitte an den Stössen die Anbringung von Dehnungsfugen.

Vorzugsweise wird das Verfahren weiter so ausgestaltet, dass vor der Injektion des aushärtbaren Materials zwischen dem ersten Kanalisationsrohrabschnitt und dem Korrosionsschutzrohrabschnitt der Ringspalt an beiden Stirnseiten je durch eine temporär wirksame Abdichtung und dann bei jedem stossenden Korrosionsschutzrohrabschnitt die äussere Stirnseite des Ringspaltes verschlossen wird, wobei dann vorteilhaft die Injektion des aushärtbaren Materials über Leistungsmittel an einem inneren Scheitelpunkt des Korrosionsschutzrohrabschnittes eingeleitet und der Ringspalt zwischen Kanalisationsrohrabschnitt und Korrosionsrohrabschnitt dann vollständig durch Rückströmung des injizierten Materials unter stirnseitigem und/oder radialem Luftaustritt gefüllt wird.

Durch diese Massnahmen wird eine sehr schnelle Auffüllung des Ringspaltes zwischen Kanalisationsrohrabschnitt und Korrosionsrohrabschnitt mit Material frei von Lufteinschlüssen bei hoher Dichte und somit optimaler Festigkeit erreicht.

Um zu gewährleisten, dass der Vorschub des Korrosionsschutzrohres resp. der Schalungsvorrichtung im Kanalisationsrohr resp. die Abdichtung vor der Jnjektion nicht durch Bruchstellen, Auswaschungen u. dgl. behindert resp. gefährdet wird, ist es von Vorteil, dass das zu sanierende Kanalisationsrohr vor dem Einbringen des Korrosionsschutzrohres wenigstens teilweise ausgeglättet wird.

Um eine solche Vorsanierung durchführen zu können, muss das Kanalisationsrohr wenigstens einen Durchmesser von etwa 800 mm aufweisen, weshalb auch noch solche relativ kleinen Durchmesser unter den Begriff "Kanalisationsrohre begehbarer Grösse" fallen, für welche das vorliegende erfindungsgemässe Verfahren anwendbar ist.

Ferner betrifft die vorliegende Erfindung eine Sanierungseinrichtung zur Durchführung des Verfahrens zum Sanieren von Kanalisationsrohren im begehbaren Bereich.

Diese Sanierungseinrichtung zeichnet sich erfindungsgemäss aus durch eine, aus radial verstellbaren Rohrsegmenten bestehende, der temporären inneren Abstützung eines Korrosionsschutzrohrabschnittes dienende Schalungsvorrichtung, die sich an einem koaxialen inneren Stützrohr über hydraulische, mechanische o. dgl. Stellmittel abstützt, wobei das Stützrohr montageaussenseitig fest mit einer Träger- und Steuereinheit und montageinnenseitig vorzugsweise lösbar mit einer fahrbaren Zentriereinheit verbunden ist und wobei ferner das Stützrohr an seinen Enden je mindestens zwei radial abragende, der rollenden Abstützung der Sanierungseinrichtung auf der Innenwand des Kanalisationsrohres dienende Führungsrollen trägt.

Diese erfindungsgemässe Sanierungseinrichtung gestattet eine sehr schnelle und rationelle Durchführung des erfindungsgemässen Verfahrens, wobei weitere vorteilhafte Ausgestaltungen dann bestehen, wenn die fahrbare Zentriereinheit umfänglich verteilte, radial abragende Führungsrollen trägt, welche der zentrierenden Abstützung der Schalungsvorrichtung im vorangehend verlegten Korrosionsschutzrohrabschnitt dienen, wenn weiter die der rollenden Abstützung der Sanierungseinrichtung auf der Innenwand des Kanalisationsrohres dienenden montageinnenseitigen Führungsrollen am Stützrohr wegklappbar sind, wenn zudem das Stützrohr im Bereich der Stirnseiten des abzustützenden Korrosionsschutzrohrabschnittes vorzugsweise pneumatisch betätigbare Dichtungsmanschetten trägt, wobei mindestens die montageinnenseitigen Dichtungsmanschetten wegnehmbar sind und wenn die Träger- und Steuereinheit Betätigungs- und Anschlussmittel mindestens für die Stellmittel der Schalungsvorrichtung, für das Koppeln der Zentriereinheit, für das Verstellen der Führungsrollen am Stützrohr für die Dichtungsmanschetten und für die auf dem Korrosionsschutzrohrabschnitt verlegten Injektionsleitungen umfasst.

Eine beispielsweise Ausführungsform einer erfindungsgemässen Sanierungseinrichtung zur Durchführung des erfindungsgemässen Verfahrens zum Sanieren von Kanalisationsrohren begehbarer Grösse ist nachfolgend anhand der Zeichnung näher erläutert. Es zeigen:

Fig. 1    im Querschnitt einen segmentförmigen Ausschnitt eines in erfindungsgemässer Weise sanierten Kanalisationsrohres;

Fig. 2    in Seitenansicht, teilweise im Schnitt, eine Sanierungseinrichtung in Funktionslage; und

Fig. 3    einen Schnitt entlang der Schnittlinie III-III in Fig. 1.

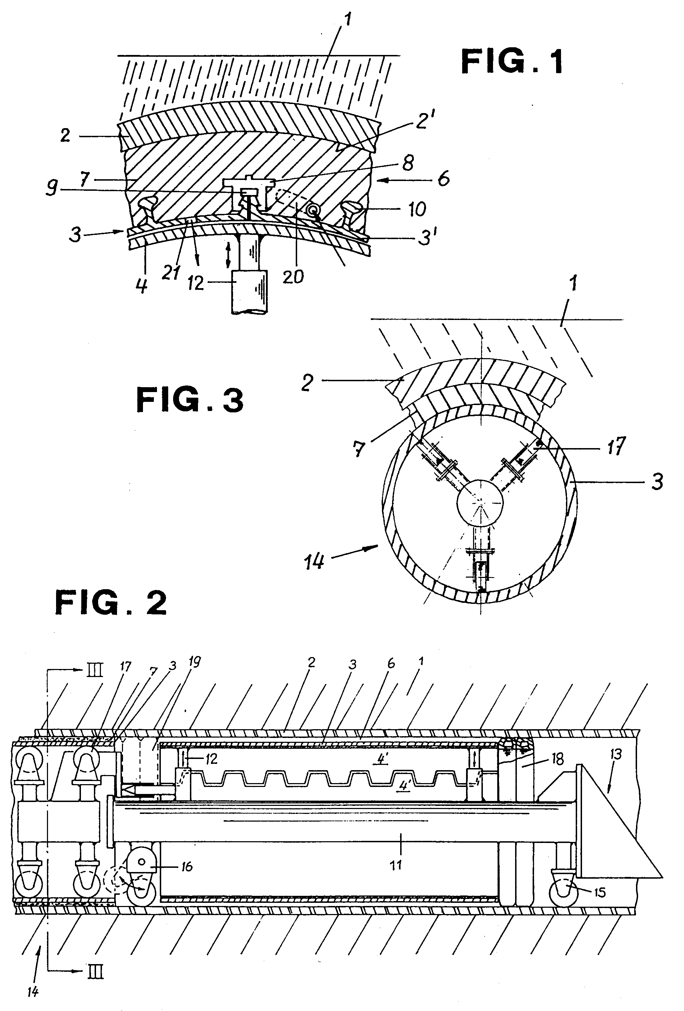

Zur Sanierung eines im Erdreich 1 verlegten Kanals 2 wird gemäss Fig. 1 von der Innenwand 2' des betreffenden Rohrabschnittes distanziert ein, dem vorgenannten Rohrprofil entsprechender, hier kreisrunder Korrosionsschutzrohrabschnitt 3 angeordnet. Hierfür erfolgt dessen Abstützung temporär über eine Schalungsvorrichtung 4 einer Sanierungseinrichtung, wie das nachfolgend noch näher beschrieben ist.

Im Ringspalt 6 zwischen Kanalisationsrohr 2 und Korrosionsschutzrohr 3 ist ein aushärtbares Material 7, wie Zementsuspension mit variablen Zusatzmitteln oder ähnliches injiziert, nach dessen Bindung die Schalungsvorrichtung 4 wieder entfernt wird, wonach ein saniertes Kanalisationsrohr 2,7,3 besteht, das alle vorerwähnten Erfordernisse erfüllt.

Wie bereits vorerwähnt, besteht hierfür das Korrosionsschutzrohr 3 aus einem Hart-PVC oder PE-HD und wird aus im erforderlichen Radius extrudierten Profilen 3' vormontiert. Hierbei findet eine Längsverbindung mittels Klemmleisten 8 statt, die mit einem eingelegten elastomeren Dichtprofil 9 versehen sind. Umfänglich verteilt ragen vom Korrosionsschutzrohr 3 T-förmige Verankerungs- und Armierungs-Rippen 10 ab.

Solche vorgefertigten Korrosionsschutzrohrabschnitte 3 können unterschiedliche Länge aufweisen, wobei sich Rohrabschnitte von einer Länge von ca. 2m gut verlegen lassen. Die Stösse bilden den Stirnseiten dieser Korrosionsschutzrohrabschnitte können zur Bildung von Dehnungsfugen vorbereitet sein (nicht gezeigt).

Wie Fig. 2 und 3 mehr im Einzelnen zeigen, umfasst die Sanierungseinrichtung zur Durchführung des Verfahrens eine, aus radial verstellbaren Rohrsegmenten 4' bestehende, der temporären inneren Abstützung eines Korrosionsschutzrohrabschnittes 3 dienende Schalungsvorrichtung 4, die sich an einem koaxialen inneren Stützrohr 11 über hydraulische, mechanische o. dgl. Stellmittel 12 abstützt, wobei das Stützrohr 11 montageaussenseitig fest mit einer Träger- und Steuereinheit 13 und montageinnenseitig vorzugsweise lösbar mit einer fahrbaren Zentriereinheit 14 verbunden ist und wobei ferner das Stützrohr 11 an seinen Enden je mindestens zwei radial abragende, der rollenden Abstützung der Sanierungseinrichtung auf der Innenwand 2' des Kanalisationsrohres 2 dienende Führungsrollen 15,16 trägt.

Zur Durchführung der Sanierung befindet sich die Sanierungseinrichtung zunächst auf Strassen-Niveau und wird dort mit einem Korrosionsschutzabschnitt 3 bestückt. Danach erfolgt ein Absenken der Sanierungseinrichtung durch einen entsprechenden Spezialschacht auf Kanal-Niveau. Dann wird in das gereinigte und gegebenenfalls durch Ausglätten vorsanierte Kanalisationsrohr 2 eingefahren bis zur Montageposition. Die in Einschubrichtung Front der Sanierungseinrichtung wird als montageinnenseitig und das Ende der Einrichtung als montageaussenseitig bezeichnet. Nach nachfolgend noch näher beschriebener Zentrierung, Abdichtung und Injektion wird dann die Schalungsvorrichtung 4 zurückgestellt, die Sanierungseinrichtung zurückgefahren und auf Strassen-Niveau zurückgehoben, worauf sich die Verfahrensschritte im wesentlichen wiederholen.

Um nun vor der Injektion des aushärtbaren Materials zwischen dem ersten Kanalisationsrohrabschnitt und dem Korrosionsschutzrohrabschnitt den Ringspalt an beiden Stirnseiten je durch eine temporär wirksame Abdichtung und dann bei jedem stossenden Korrosionsschutzrohrabschnitt nur die äussere Stirnseite des Ringspaltes zu verschliessen, trägt das Stützrohr 11 im Bereich der Stirnseiten des abzustützenden Korrosionsschutz-

rohrabschnittes 3 vorzugsweise pneumatisch betä-tigbare Dichtungsmanschetten 18,19, wobei minde-stens die montageinnenseitigen Dichtungsman-schetten 19 wegnehmbar sind.

Die Injektion des aushärtbaren Materials erfolgt dann über Leistungsmittel 20 (Fig. 1) an einem inneren Scheitelpunkt des Korrosionsschutzrohrabschnittes 3, worauf sich der Ringspalt zwischen Kanalisationsrohrabschnitt 2 und Korrosionsrohrabschnitt 3 vollständig durch Rückströmung des injizierten Materials unter stirnseitigem und/oder radialem Luftaustritt 21 füllt.

Für eine einwandfreie Zentrierung der Sanierungseinrichtung resp. des Korrosionsschutzrohres 3 im Kanalisationsrohr 2 ist vorgesehen, dass die fahrbare Zentriereinheit 14 umfänglich verteilte, radial abragende Führungsrollen 17 trägt, welche der zentrierenden Abstützung der Schalungsvorrichtung 4 im vorangehend verlegten Korrosionsschutzrohrabschnitt 3 dienen (Fig. 3). Dies verlangt, dass die der rollenden Abstützung der Sanierungseinrichtung auf der Innenwand 2' des Kanalisationsrohres 2 dienenden montageinnenseitigen Führungsrollen 16 am Stützrohr 11 wegklappbar sind, wie das durch die gestrichelten Linien montageinnenseitig in Fig. 2 veranschaulicht ist.

Im weiteren kann die Träger- und Steuereinheit 13 nicht näher gezeigte Betätigungs- und Anschlussmittel mindestens für die Stellmittel 12 der Schalungsvorrichtung 4, für das Koppeln der Zentriereinheit 14, für das Verstellen der Führungsrollen 16 am Stützrohr 11 für die Dichtungsmanschetten 18,19 und für die auf dem Korrosionsschutzrohrabschnitt 3 verlegten Injektionsleitungen 20 umfassen.

Selbstverständlich liegen weitere mögliche Modifikationen in der Bauausführung der Sanierungseinrichtung zum Sanieren von Kanalisationsrohren durchaus im Rahmen der Erfindung. Ausser der pneumatischen Abdichtung können sämtliche Stell- und Verschiebungsfunktionen mechanisch ausgeführt werden, oder aber es ist eine vollautomatische pneumatische, hydraulische oder elektrische Steuerung möglich.

Weiter können die Schalungssegmente 4' an ihren Längsseiten zahnartig ausgebildet sein, wie das in Fig. 2 veranschaulicht ist, um das Korrosionsschutzrohr übergreifend abzustützen.

Weiter kann vor der Injektion resp. vor der Einbringung des Korrosionsschutzrohres auf diesem eine lastgerechte Stahlarmierung resp. eine Armierung zur Anpassung der Rohrstatik an neue Belastungssituationen resp. zur Ueberbrückung von Rissen aufgebracht werden.

Selbstverständlich beschränkt sich das erfindungsgemässe Sanierungsverfahren nicht nur auf kreisrunde Kanalquerschnitte, sondern ist für jede Art Querschnitt, wie Eiprofil, Rechteckprofil u.dgl.

geeignet.

Somit ergibt sich aus dem Vorstehenden eine Sanierungseinrichtung, die vielseitig als eine einfachste, handbetätigte Konstruktion bis zu einer praktisch roboterartigen Anlage ausgestaltet werden kann, um das erfindungsgemässe Verfahren optimal durchführen zu können. Grosse Vorteile ergeben sich auch dadurch, dass das Verfahren ohne offene Bauweise, ohne wesentliche Verkehrs-behinderungen, ohne Gefährdung umliegender Ge-bäude und ohne Beeinflussung bestehender Werkleitungen durchgeführt werden kann.

**Patentansprüche**

1. Verfahren zum Sanieren von Kanalisationsroh-ren begehbarer Grösse, dadurch gekennzeich-net, dass von der Innenwand des betreffenden Kanalisationsrohrabschnittes distanziert ein, dem Kanalisationsrohrprofil entsprechender Korrosionsschutzrohrabschnitt temporär durch eine Schalungsvorrichtung abgestützt, dann im Ringspalt zwischen Kanalisationsrohr und Kor-rosionsschutzrohr ein aushärtbares Material in-jiziert und dann die Schalungsvorrichtung wieder entfernt wird.

2. Verfahren nach Anspruch 1, dadurch gekenn-zeichnet, dass als Korrosionsschutzrohr vorge-fertigte Korrosionsschutzrohrabschnitte aus ei-nem Hart-Kunststoff, wie PVC oder PE-HD, verwendet werden.

3. Verfahren nach Anspruch 1, dadurch gekennzeichnet, dass vor der Injektion des aushärtbaren Materials zwischen dem ersten Kanalisa-tionsrohrabschnitt und dem Korrosionsschutz-rohrabschnitt der Ringspalt an beiden Stirnseiten je durch eine temporär wirksame Abdichtung und dann bei jedem stossenden Korrosionsschutzrohrabschnitt die äussere Stirnseite des Ringspaltes verschlossen wird.

4. Verfahren nach Anspruch 3, dadurch gekennzeichnet, dass die Injektion des aushärtbaren Materials über Leistungsmittel an einem inne-ren Scheitelpunkt des Korrosionsschutzrohrab-schnittes eingeleitet und der Ringspalt zwi-schen Kanalisationsrohrabschnitt und Korro-sionsrohrabschnitt dann vollständig durch Rückströmung des injizierten Materials unter stirnseitigem und/oder radialem Luftaustritt gefüllt wird.

5. Verfahren nach Anspruch 1, dadurch gekennzeichnet, dass das zu sanierende Kanalisationsrohr vor dem Einbringen des Korrosions-schutzrohres gereinigt und wenigstens teilwei-

se ausgeglättet wird.

6. Sanierungseinrichtung zur Durchführung des Verfahrens nach den Ansprüchen 1 bis 5, gekennzeichnet durch eine, aus radial verstellbaren Rohrsegmenten (4') bestehende, der temporären inneren Abstützung eines Korrosionsschutzrohrabschnittes (3) dienende Schalungsvorrichtung (4), die sich an einem koaxialen inneren Stützrohr (11) über hydraulische, mechanische o.dgl. Stellmittel (12) abstützt, wobei das Stützrohr (11) montageaussenseitig fest mit einer Träger- und Steuereinheit (13) und montageinnenseitig vorzugsweise lösbar mit einer fahrbaren Zentriereinheit (14) verbunden ist und wobei ferner das Stützrohr (11) an seinen Enden je mindestens zwei radial abragende, der rollenden Abstützung der Sanierungseinrichtung auf der Innenwand (2') des Kanalisationsrohres (2) dienende Führungsrollen (15,16) trägt.

7. Sanierungseinrichtung nach Anspruch 6, dadurch gekennzeichnet, dass die fahrbare Zentriereinheit (14) umfänglich verteilte, radial abragende Führungsrollen (17) trägt, welche der zentrierenden Abstützung der Schalungsvorrichtung (4) im vorangehend verlegten Korrosionsschutzrohrabschnitt (3) dienen.

8. Sanierungseinrichtung nach den Ansprüchen 6 und 7, dadurch gekennzeichnet, dass die der rollenden Abstützung der Sanierungseinrichtung auf der Innenwand (2') des Kanalisationsrohres (2) dienenden montageinnenseitigen Führungsrollen (16) am Stützrohr (11) wegklappbar sind.

9. Sanierungseinrichtung nach Anspruch 6, dadurch gekennzeichnet, dass das Stützrohr (11) im Bereich der Stirnseiten des abzustützenden Korrosionsschutzrohrabschnittes (3) vorzugsweise pneumatisch betätigbare Dichtungsmanschetten (18,19) trägt, wobei mindestens die montageinnenseitigen Dichtungsmanschetten (19) wegnehmbar sind.

10. Sanierungseinrichtung nach Anspruch 6, dadurch gekennzeichnet, dass die Träger- und Steuereinheit (13) Betätigungs- und Anschlussmittel mindestens für die Stellmittel (12) der Schalungsvorrichtung (4), für das Koppeln der Zentriereinheit (14), für das Verstellen der Führungsrollen (16) am Stützrohr (11) für die Dichtungsmanschetten (18,19) und für die auf dem Korrosionsschutzrohrabschnitt (3) verlegten Injektionsleitungen (20) umfasst.

FIG. 1

FIG. 3

FIG. 2

Europäisches
Patentamt

EUROPÄISCHER RECHERCHENBERICHT

Nummer der Anmeldung

EP 91115152.0

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| Y | DE - A - 2 918 275 (FRIEDRICHSFELD GMBH) * Fig. 2; Ansprüche 1-6 * -- | 1,2,3, 6,7 | F 16 L 55/165 F 16 L 55/162 E 03 F 3/04 |
| Y | CH - A - 668 820 (FUTUR TECH) * Fig. 1-3; Ansprüche 1-3 * -- | 1,2,3, 6,7 | |
| A | DE - A1 - 2 854 224 (HENNECKE) * Ansprüche 1,2; Fig. 1 * ---- | 1,6 | |

RECHERCHIERTE SACHGEBIETE (Int. Cl.⁵)

F 16 L 55/00
E 03 F 3/00

Der vorliegende Recherchenbericht wurde für alle Patentansprüche erstellt.

| Recherchenort WIEN | Abschlußdatum der Recherche 25-11-1991 | Prüfer RIEDER |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03 82